# FASCICULE DE BREVET EUROPEEN

(11) **EP 1 053 685 B1**
(45) Date de publication et mention de la délivrance du brevet: **17.09.2003**
(21) Numéro de dépôt: 00401258.9
(22) Date de dépôt: 09.05.2000
(51) Int. Cl.: A23C 9/146, A23C 9/144, A23C 9/142

(54) **Procédé de traitement d'un lactosérum en vue de sa déminéralisation**
Verfahren zur Demineralisierung von Molke
Sweet whey desalting method

(30) Priorité: 17.05.1999 FR 9906217
(43) Date de publication de la demande: 22.11.2000
(73) Titulaire: EURODIA INDUSTRIE SA, 91320 WISSOUS (FR)
(72) Inventeur: Noel, Roland, 31240 L'Union (FR)
(74) Mandataire: Robert, Jean-Pierre

(56) Documents cités:
- EP-A- 0 835 610
- US-A- 5 084 285
- GUENGERICH C ET AL: "DEMINERALIZATION OF WHEY AND WHEY PRODUCTS" BULLETIN FEDERATION INTERNATIONALE DE LAITERIE,BE,BRUSSEL, vol. 311, 1996, pages 11-13, XP000866001 ISSN: 0250-5118
- BERGHOFER, E. ; SCHEIBL, A.: "TECHNISCHE FRAKTIONIERUNG VON MOLKE DURCH IONENAUSTAUSCHER-CHROMATOGRAPHIE" MILCHWISSENSCHAFT, vol. 41, no. 11, novembre 1986 (1986-11), pages 700-703, XP002129527 MUNICH, ALLEMAGNE

## Description

La présente invention concerne la déminéralisation des lactosérums.

On rappellera que le lactosérum est un sous-produit de l'industrie laitière et fromagère qui possède un potentiel de valorisation important en ce qui concerne d'une part le lactose et d'autre part les protéines sériques qu'il contient.

La difficulté de sa valorisation tient à la présence en quantité importante de sels minéraux qui, d'une part doivent être éliminés pour rendre le produit final propre à la consommation et, d'autre part constituent des facteurs induisant dans le traitement du lactosérum des contraintes techniques et économiques difficiles à maîtriser.

Il existe plusieurs méthodes pour extraire du lactosérum au moins une partie des sels minéraux qu'il contient. On citera parmi celles-ci l'échange d'ions, l'électrodialyse, la nanofiltration... Toutes ont fait l'objet d'exploitation industrielle avec plus ou moins de bonheur dans les résultats obtenus et surtout en ce qui concerne le coût de la mise en oeuvre, c'est-à-dire celui de l'investissement et de l'exploitation.

On a également tenté de les associer les unes aux autres pour les enchaîner et profiter pour chacune de leurs performances maximales. On a constaté que les résultats obtenus par l'une constituent parfois une cause de diminution des performances de la suivante, d'autant que les techniques ne participent généralement pas du même savoir-faire. Par exemple, l'échange d'ions et l'électrodialyse appartiennent à deux domaines techniques différents qui ne sont en général pas maîtrisés par les mêmes personnes.

La présente invention est née de l'observation du comportement du lactosérum à l'égard des membranes soit d'électrodialyse, soit d'appareils ou d'unité de nanofiltration. On s'est ainsi rendu compte que le transfert des ions divalents (anions ou cations) du lactosérum ne s'opère qu'avec difficulté au travers de ces membranes, de sorte que pour obtenir de bons résultats, les conditions économiques deviennent prohibitives. On parvient en effet de manière coûteuse à séparer du lactosérum certains des ions calcium ou magnésium qu'il contient ; quels que soient les moyens économiques mis en oeuvre, il est très difficile par ailleurs de retirer les ions phosphate et citrate.

Par la présente invention, on propose une organisation optimale de certaines techniques de déminéralisation afin d'obtenir un lactosérum déminéralisé de manière poussée au meilleur coût et avec un minimum de perte de matière valorisable tout en sauvegardant la qualité intrinsèque du produit, notamment sur le plan microbiologique en le préservant par exemple de la dégradation de lactose en acide lactique, de la dégradation des protéines en azote non protéique (NPN)... Par cette organisation on améliore très sensiblement les performances des appareils de séparation mettant en oeuvre des membranes telles que les électrodialyseurs ou les unités de nanofiltration, ce qui permet de diminuer les surfaces de membrane à mettre en oeuvre et de diminuer le coût de leur exploitation, ayant ainsi pour conséquence d'obtenir un bas coût de revient du traitement de déminéralisation du lactosérum, que celui-ci soit traité à l'état brut non concentré ou à l'état concentré.

A cet effet, l'invention a pour objet un procédé de traitement d'un lactosérum en vue de sa déminéralisation comprenant une phase de séparation des sels par transfert au travers de membranes soit d'électrodialyse soit de nanofiltration, remarquable en ce qu'il comprend en amont de cette phase de séparation, et successivement, au moins une étape d'échange de cations divalents par des protons et au moins une étape d'échange d'anions divalents par des ions chlorure.

Cet échange de cations divalents contre des protons et d'anions contre des ions chlorure présente de multiples avantages en ce qui concerne d'une part le traitement ultérieur mettant en oeuvre des membranes de séparation et d'autre part la qualité du produit lui-même. Par exemple, l'échange cations par des protons diminue l'influence des protéines instables qui étaient souvent associées aux cations divalents et qui avaient tendance à précipiter sur la surface des membranes ce qui demandait des arrêts de production fréquents pour nettoyage. Par exemple, comme l'étape d'échange anions divalents par des ions chlorure concerne essentiellement les sulfates, on retire au produit l'inconvénient de ces sulfates qui étaient d'une part peu ionisés donc difficiles à transférer au travers des membranes d'un électrodialyseur et, d'autre part, très polluants à l'égard de ces membranes. Par exemple, le produit issu de ces deux étapes d'échange d'ions est un produit qui possède un pH relativement bas et le pH acide de ce lactosérum est un facteur qui permet le transfert des ions citrate et des ions phosphate au travers des membranes de nanofiltration. Un tel transfert est pratiquement inexistant en présence d'un lactosérum non acidifié. Cette performance est d'une importance considérable car on sait que les ions phosphate sont, parmi les sels, ceux qui sont le plus difficile à éliminer.

On notera également l'avantage de disposer en sortie de ces étapes d'échange d'ions d'un produit à pH fortement acide sur le plan de la maîtrise de sa qualité microbiologique. En effet ce produit se prête de manière très intéressante à une opération de pasteurisation aux alentours de 90°, 100° pendant un temps d'une à plusieurs minutes, pasteurisation qui permet d'éliminer les germes les plus difficiles à détruire, c'est-à-dire les germes sporulés sans toutefois altérer les protéines.

Dans un mode de réalisation préféré et particulier de l'invention, l'étape d'échange des cations divalents contre des protons comprend une percolation du produit sur une colonne de résine cationique faible ou appelée résine carboxylique. L'un des intérêts d'une telle résine réside dans les moyens de régénération dont elle a besoin comme cela sera expliqué ci-après.

On parfait l'extraction des cations divalents en faisant ensuite percoler le produit issu de cette première colonne de résine carboxylique sur une résine cationique forte. Alors que quelque 60 à 65% des cations divalents calcium et magnésium ont été échangés contre des protons par percolation sur la résine carboxylique, le reste de ces cations divalents est échangé par la résine cationique forte contre des protons. Cette résine cationique forte permet en outre de trouver l'équilibre du pH de préférence inférieur à 3 par échange de protons contre des ions monovalents potassium et sodium.

On fait enfin passer le produit sur une résine anionique forte et de préférence dans une colonne qui comprend en lits mélangés d'une part la résine cationique forte et d'autre part, la résine anionique forte susdite afin de procéder à l'échange des anions divalents contre des anions chlorure. On constate que cet échange intéresse essentiellement les anions sulfate.

Ce traitement conduit à des résultats tout à fait semblables qu'il s'agisse d'un lactosérum non concentré ou d'un lactosérum concentré. Bien entendu, les quantités de résine à mettre en oeuvre seront proportionnelles à la quantité de sels à traiter.

Si le lactosérum percolé sur les résines est un lactosérum concentré, le produit après ces étapes d'échange ionique sera, selon l'invention, conduit à l'entrée d'un électrodialyseur. En effet, s'agissant d'un produit concentré, la quantité des charges électriques par unité de volume est très supérieure à celle présente dans un lactosérum non concentré, ce qui milite en faveur de l'utilisation d'un électrodialyseur dont le fonctionnement est alors optimal du point de vue de la conductivité électrique. Comme par ailleurs le produit est pratiquement dépourvu d'ions divalents, le fonctionnement est également optimal sur le plan du transfert des ions au travers des membranes cationiques et anioniques. On a constaté que, d'une part l'électrodialyseur ainsi utilisé demandait beaucoup moins de maintenance et d'entretien et que, d'autre part la durée de vie des membranes était très sensiblement augmentée dans des proportions allant pratiquement de 1 à 2.

Dans le cas d'un lactosérum doux non concentré, c'est-à-dire où la concentration en matière sèche est environ trois fois inférieure à celle d'un lactosérum doux concentré, la poursuite de la déminéralisation s'opère de manière préférée par l'utilisation d'une unité de nanofiltration. En effet, les étapes d'échanges ioniques ayant éliminé la plupart des inconvénients existants dans la nanofiltration classique d'un lactosérum, cette phase de traitement possède un premier avantage de parfaire la déminéralisation du lactosérum car le transfert des anions chlorure ne pose aucune difficulté et l'acidité du milieu étant importante, le transfert des ions citrate et phosphate qui n'ont pas été échangés dans les étapes précédentes est grandement amélioré. Elle possède un second avantage qui est d'extraire du produit une très grande quantité d'eau amenant ainsi dans un lactosérum déminéralisé une concentration importante en produits valorisables que sont le lactose et les protéines sériques. On a constaté là aussi que les performances de l'opération de nanofiltration étaient sans commune mesure avec celles habituellement rencontrées lors de l'application de ce traitement à un lactosérum brut.

D'autres caractéristiques et avantages de l'invention ressortiront de la description donnée ci-après de deux modes de sa réalisation selon qu'elle s'applique à la déminéralisation d'un lactosérum concentré ou à la déminéralisation d'un lactosérum brut (dit liquide).

Il sera fait référence aux dessins annexés parmi lesquels :
- la figure 1 est un schéma d'une installation mettant en oeuvre le procédé de l'invention pour déminéraliser un lactosérum concentré,
- la figure 2 est un schéma d'une installation mettant en oeuvre l'invention pour déminéraliser un lactosérum non concentré.

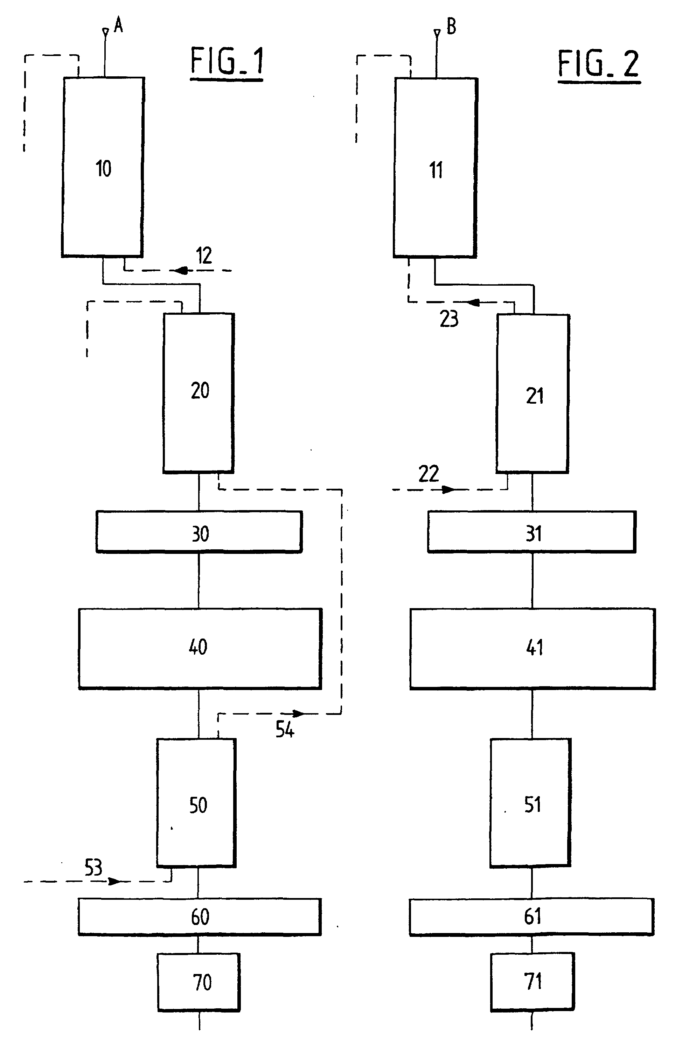

Le lactosérum à traiter par l'installation représentée à la figure 1 est un lactosérum concentré par exemple à 22% de matière sèche environ. Ce lactosérum concentré est introduit en A dans une première colonne 10 d'échange d'ions qui est une colonne cationique faible ou carboxylique. Dans cette colonne, il s'effectue l'échange ionique entre les cations divalents et des protons à raison d'environ 60 à 70% de cations divalents et pour 5 à 15% à l'échange des cations monovalents en sodium et potassium contre des protons. Le produit issu de la colonne 10 pénètre dans une colonne 20 qui est une colonne possédant un mélange de deux résines, une résine cationique forte et une résine anionique forte. Ce type de colonne est dite colonne à lits mélangés comme cela est connu en soi. Dans cette colonne il se produit un échange entre ce qui peut subsister de cations divalents calcium et magnésium et des protons, entre les ions sodium et potassium et des protons et enfin entre les anions principalement sulfate et des anions chlorure. A l'issue de la colonne 20, le produit contient une grande quantité de protons et est donc fortement acide (pH entre 2 et 2,5).

Il pénètre alors dans une unité de pasteurisation 30 qui permet de lui conférer une grande stabilité microbiologique, ce qui présente un intérêt pour la phase ultérieure de traitement qui est une électrodialyse à 40° environ. On constate en effet que malgré cette température, le lactosérum pasteurisé ne développe aucune flore microbiologique néfaste. Dans l'électrodialyseur 40 le lactosérum est débarrassé de la plupart de ses ions chlorure et de ses protons. Les performances de cet électrodialyseur sont très nettement améliorées par rapport à son usage sur un lactosérum concentré non débarrassé de ses ions divalents, du fait d'une absence de colmatage des membranes et du fait qu'il n'est pas nécessaire de soumettre cet électrodialyseur à des conditions de fonctionnement extrêmes conduisant à une réduction de la durée de vie des membranes.

A la sortie de l'électrodialyseur on fait subir au produit un nouvel échange ionique sur une résine anionique forte qui permet cette fois d'échanger les citrates et les phosphates contre des chlorures, anions divalents qui n'avaient pu être retenus par les résines précédentes du fait de la présence des ions sulfates et de leur compétition à l'égard de ses résines avec ces anions peu ionisés et d'autre part, qui n'avaient pas pu être extraits par l'électrodialyseur. En effet les anions divalents phosphates et citrates ne sont plus dans cette résine en compétition avec des anions plus labiles et la résine peut les substituer plus aisément. Le produit peut ensuite subir une seconde électrodialyse de finition dans l'électrodialyseur 60 pour enfin passer sur une résine anionique 70 régénérée à la soude afin de procéder à sa normalisation.

Il est intéressant de noter que cette installation se prête à une régénération économique des résines. En effet la colonne anionique 50 est régénérée à l'acide chlorhydrique 53 et l'effluent de régénération 54 est conduit à la colonne à lit mélangé 20 pour sa régénération d'une part en protons en ce qui concerne la résine cationique forte et d'autre part en ions chlorures pour ce qui concerne la résine anionique forte. La résine carboxylique de tête 10 est alors régénérée à l'acide chlorhydrique 12. Comme cette résine se régénère relativement aisément (elle recouvre une capacité pratique donnée avec une quantité de régénérant d'environ 135 % de cette capacité), la consommation de régénérant "neuf" est optimisée.

A la figure 2 les composants 11, 21 et 31 sont équivalents aux composants 10, 20 et 30 de l'installation de la figure 1, c'est-à-dire respectivement une ou plusieurs colonnes de résine carboxylique 11, une ou plusieurs colonnes à lits mélangés de résines cationique forte, anionique forte 21, et une unité de pasteurisation 31. On introduit en B dans cette installation en tête de la résine carboxylique 11 du lactosérum doux non concentré dont la teneur en matière sèche est de l'ordre de 6%. Le traitement de ce lactosérum est en tout point semblable à celui déjà décrit en regard de la figure 1 pour ce qui concerne les résines 11 et 21. Il en est de même pour la pasteurisation.

En revanche, à la sortie de l'unité de pasteurisation 31, le produit est dirigé sur une unité de nanofiltration 41 au lieu d'un électrodialyseur. En effet, les performances d'une unité de nanofiltration sont bien supérieures à celles d'un électodialyseur en ce qui concerne la déminéralisation car les quantités de charges électriques par unité de volume seraient pour un lactosérum non concentré relativement faibles et seraient un facteur limitant en ce qui concerne la conductivité dans l'électrodialyseur. En outre, comme il s'agit en final d'obtenir un produit débarrassé de son eau, c'est-à-dire soit un produit en poudre, soit un produit très concentré notamment en lactose, on profite de la capacité d'extraction de l'eau que procure la nanofiltration qui, dans ce cas, vient compenser avantageusement l'opération préalable d'extraction d'eau qu'il a fallu réaliser pour obtenir le petit lait concentré traité avec l'installation de la figure. 1

Comme expliqué ci-dessus, le fonctionnement de l'unité de nanofiltration est optimal car la plupart des ions qui traversent la membrane sont soit des anions monovalents soit des protons et car, le produit étant très acide (pH 2 à 2,5), on constate aussi un transfert très important des ions citrate et des ions phosphate. En particulier, la nanofiltration permet d'extraire aux environs de 70 % des ions phosphate et citrate, là où auparavant on assistait à une extraction non significative.

Le produit peut comme dans l'installation de la figure 1 être amélioré en percolant sur une colonne de résine anionique régénérée aux ions chlorure 51, sur un électrodialyseur 61 et enfin sur une colonne de résine anionique régénérée à la soude pour normalisation de son pH.

En ce qui concerne la régénération des résines et notamment des résines des colonnes 11 et 21, on procédera à la régénération de la colonne 21 par de l'acide chlorhydrique 22 et avec l'effluent 23 de régénération, à la régénération de la résine carboxylique 11, sachant que cette résine carboxylique se suffit amplement des charges résiduelles de l'effluent de régénération de la colonne à lit mélangé.

## Revendications

1. Procédé de traitement d'un lactosérum en vue de sa déminéralisation comprenant une phase de séparation des sels par transfert au travers de membranes d'électrodialyse ou de nanofiltration (40, 41) **caractérisé en ce qu'**il comprend en amont de cette phase de séparation et successivement, au moins une étape (10, 11) d'échange de cations divalents par des protons et au moins une étape (20, 21) d'échange d'anions divalents par des ions chlorure.

2. Procédé selon la revendication 1, **caractérisé en ce que** l'étape d'échange des ions divalents par des protons comprend une percolation du produit sur une colonne (10, 11) de résine cationique faible.

3. Procédé selon la revendication 2, **caractérisé en ce que** l'étape d'échange des anions divalents par des anions chlorure comporte en aval de la résine cationique faible (10, 11) une étape de percolation du produit sur une colonne (20, 21) de résine anionique forte.

4. Procédé selon la revendication 3, **caractérisé en ce que** l'étape d'échange des anions divalents par des anions chlorures, en aval de la résine cationique faible, est simultanée d'un complément d'échange de cations mono et divalents par des protons par percolation du produit sur une résine cationique forte, celle-ci étant disposée dans au moins une colonne (20, 21) à lits mélangés avec la résine anionique forte.

5. Procédé selon l'une des revendications précédentes, **caractérisé en ce que** le lactosérum à traiter étant brut, non concentré, les membranes susdites appartiennent à une unité de nanofiltration (41).

6. Procédé selon l'une des revendications 1 à 4, **caractérisé en ce que** le lactosérum à traiter étant concentré, les membranes susdites appartiennent à une unité d'électrodialyse (40).

7. Procédé selon l'une des revendications précédentes, **caractérisé en ce qu'**entre les étapes d'échanges d'ions (10, 20, 11, 21) et les étapes de séparation par membranes (40, 41), le produit est soumis à une phase de pasteurisation (30, 31) à pH compris entre 2 et 3.

## Claims

1. A method of treating whey for demineralization purposes, the method comprising a stage of separating out salts by transfer through electrodialysis or nanofiltration membranes (40, 41), the method being **characterized in that**, upstream from this separation stage, it comprises in succession at least one step (10, 11) of exchanging divalent cations for protons and at least one step (20, 21) of exchanging divalent anions for chloride ions.

2. A method according to claim 1, **characterized in that** the step of exchanging divalent ions for protons comprises percolating the substance over a column (10, 11) of weak cationic resin.

3. A method according to claim 2, **characterized in that** the step of exchanging divalent anions for chloride anions comprises, downstream from the weak cationic resin (10, 11), a step of percolating the substance over a column (20, 21) of strong anionic resin.

4. A method according to claim 3, **characterized in that** the step of exchanging divalent anions for chloride anions downstream from the weak cationic resin is simultaneously with additional exchange of mono- and divalent cations for protons by percolating the substance over a strong cationic resin, said resin being disposed in at least one mixed bed column (20, 21) with the strong anionic resin.

5. A method according to any preceding claim, **characterized in that** for unconcentrated raw whey to be treated, the above membranes belong to a nanofiltration unit (41).

6. A method according to any one of claims 1 to 4, **characterized in that** for concentrated whey to be treated, the above membranes belong to an electrodialysis unit (40).

7. A method according to any preceding claim, **characterized in that** between the ion exchange steps (10, 20, 11, 21) and the membrane separation steps (40, 41), the substance is subjected to a stage of pasteurization (30, 31) at a pH lying in the range 2 to 3.

## Patentansprüche

1. Verfahren zur Demineralisierung von Molke, umfassend eine Phase der Salzseparation mittels Transport durch Elektrodialyse- oder Nanofiltrationsmembranen (40, 41) hindurch, **dadurch gekennzeichnet, daß** das Verfahren stromaufwärts der Separationsphase und aufeinanderfolgend zumindest einen Schritt (10, 11) umfaßt, in dem divalente Kationen gegen Protonen ausgetauscht werden, und zumindest einen Schritt (20, 21), in dem divalente Anionen gegen Chloridionen ausgetauscht werden.

2. Verfahren nach Anspruch 1, **dadurch gekennzeichnet, daß** der Schritt des Austauschens der divalenten lonen gegen Protonen das Perkolieren des Produkts über eine Säule (10, 11) mit einem schwach kationischen Harz umfaßt.

3. Verfahren nach Anspruch 2, **dadurch gekennzeichnet, daß** der Schritt des Austauschens der divalenten Anionen gegen Chloridanionen stromabwärts des schwach kationischen Harzes (10, 11) einen Schritt des Perkolierens des Produkts über eine Säule (20, 21) mit einem stark anionischen Harz umfaßt.

4. Verfahren nach Anspruch 3, **dadurch gekennzeichnet, daß** der Schritt des Austauschens der divalenten Anionen gegen Chloridanionen stromabwärts des schwach kationischen Harzes zugleich mit dem zusätzlichen Austauschen von mono- und divalenten Kationen gegen Protonen durch das Perkolieren des Produkts über ein stark kationisches Harz erfolgt, das in zumindest einer Säule (20, 21) in Schichten angeordnet ist, die mit dem stark anionischen Harz gemischt sind.

5. Verfahren nach einem der vorhergehenden Ansprüche, **dadurch gekennzeichnet, daß**, wenn die zu behandelnde Molke roh und unkonzentriert ist, die Membranen einer Nanofiltrationseinheit (41) zugehörig sind.

6. Verfahren nach einem der Ansprüche 1 bis 4, **dadurch gekennzeichnet, daß**, wenn die zu behandelnde Molke konzentriert ist, die Membranen einer Elektrodialyseeinheit (40) zugehörig sind.

7. Verfahren nach einem der vorhergehenden Ansprüche, **dadurch gekennzeichnet, daß** das Produkt zwischen den Schritten des lonenaustauschs (10, 20, 11, 21) und des Separierens durch die Membranen (40, 41) einem Pasteurisierungsprozess (30, 31) bei einem pH-Wert zwischen 2 und 3 unterzogen wird.
